# EUROPEAN PATENT APPLICATION

(11) **EP 2 636 346 A1**
(43) Date of publication of application: **11.09.2013**
(21) Application number: 13157760.3
(22) Date of filing: 05.03.2013
(51) Int. Cl.: A47J 43/28, A23G 9/50, A23G 3/56

(54) **Ice snack holder**

(30) Priority: 05.03.2012 NL 1039433
(71) Applicant: McCall & Smith, 5047 TW Tilburg (NL)
(72) Inventor: Boeren, Paul, 5047TW Tilburg (NL)
(74) Representative: Brants, Johan P.E.

(57) **Abstract**

The invention concerns a grippable holder for an ice snack product on a carrier, whereby the holder is provided with cup-formed receptacles for catching the dripping nourishment. The invention also concerns a system comprising said grippable holder and an ice snack product on a carrier.

## Description

### NATURE OF INVENTION

The present invention refers to a grippable holder for an ice snack product on a carrier, whereby the holder is provided with cup-shaped receptacles for receiving the dripping nourishment.

### PRIOR ART

Typically, while eating a frozen nourishment, e.g., ice snack, frozen yoghurt, ice snack cones and/or frozen candies, the melting of the nourishment leads to drippage. Sometimes, the frozen nourishment is eaten from a bowl, in which the problem of drippage is not existent. But these frozen nourishments or frozen candies are frequently mounted on an edible cone or stick, causing troublesome drippage during consumption. Both for children and for adults the drippage or drip is a nuisance, because the spilled nourishment contacts their clothes, skin, etc.

Efforts have been made in prior art to control drippage of the melting of frozen nourishments. A drip-receiving plate is disclosed in US2321519, whereby the plate is provided for receiving an ice snack cone. This invention is not a free-standing invention and therefore it constitutes a nuisance for a consumer, because there is no possibility for the temporary placement of the item on a table if necessary. Also, the drip receiving plate lacks a grip for a consumer.

US2162224 describes a drip receptacle for an ice snack within which is a second receptacle. The ice snack can be lifted manually by means of a cord. The cord might be cumbersome and difficult to handle, and this invention also does not allow the consumer to leave the drip receptacle on a table, if necessary. Neither is there a holder provided for the cone nor a separate holder for receiving the ice snack stick. Probably, the production costs for this drip receptacle are the bottleneck.

US5224646 describes a dripless ice snack holder in fig. 6 and 7, comprising a holder for an ice snack cone provided with a drip plate having openings for the downward flowing of melted ice, which accumulates at the bottom of the holder. A folded internal disk developing into a cone-shaped disk has also been provided for holding the cone. The present invention provides a structure for catching drippage in a cup-shaped receptacle and prevents melted ice from dripping onto the grippable part of the holder. Besides, this invention does not implement a folded disk for holding the ice snack, resulting in a cheaper production.

US6202970 describes a holder for a dripping object. Separate object-supporting structures can be inserted into or withdrawn from a hollow shaft portion, in which the consumable objects are clamped. Compared to the present invention, the production of the holder according to the '970 patent would imply significantly higher costs, it would require mounting before use and the possibility that parts are lost by the younger consumers is significant. Also, there is no possibility for inserting ice sticks of different stick thickness and/or length. Neither can round ice sticks be inserted.

The present invention has the objective to find a solution for at least one of said problems.

### SUMMARY OF THE INVENTION

The invention concerns a device for the temporary clamping of an ice snack product on a carrier, which comprises a central hollow, grippable shaft and a first and a second open holder provided with sidewalls stretching out from the shaft, whereby each shaft-end is provided with a holder, whereby each holder is provided with an opening for receiving the carrier of the ice snack product, whereby each receiving opening is suitable for receiving carriers of different sizes.

The advantage is that carriers of different sizes and shapes can be received in the same holder. This is economically beneficial. The sidewalls stretching out from the shaft provide the device with a receptacle for receiving the melting and/or dripping ice snack product. This prevents the melting and/or dripping ice snack product from spillage, and does not soil places like the ground, table, clothes, hands, etc. The shaft provides the device with a more practical and stronger grip for a consumer of the ice snack product compared to the provided small carrier. The strong device prevents the snack product from falling or spilling. The drip receptacle prevents the spillage of portions falling off the ice snack product.

In a second aspect, the invention concerns a system comprising a device according to the present invention and a nourishment on a carrier, whereby the carrier is clamped in a receiving opening of said device.

### DESCRIPTION OF THE DRAWINGS

**Figure 1** is a three-dimensional aerial view of a device according to a preferred shape of the present invention, jointly with an ice snack on a thick stick.
**Figure 2** is a top plan view of a device according to a preferred shape of the present invention.
**Figure 3** is a cross-sectional view of a device according to a preferred shape of the present invention.
**Figure 4** is a cross-sectional view of a device according to a preferred shape of said invention.
**Figure 5** is a three-dimensional aerial view of a device according to a preferred shape of the present invention, jointly with an ice snack on a thin stick.
**Figure 6** is a three-dimensional aerial view of a device according to a preferred shape of the present invention, jointly with an ice snack on a round stick.
**Figure 7** is a three-dimensional aerial view of a device according to a preferred shape of the present invention, jointly with an ice snack cone.
**Figure 8** is a top plan view of a receiving opening according to a preferred shape of the present invention.
**Figure 9** is a top plan view of a receiving opening according to a preferred shape of the present invention.
**Figure 10** is a top plan view of a receiving opening according to a preferred shape of the present invention.
**Figure 11** is a top plan view of a receiving opening according to a preferred shape of the present invention.

### DETAILED DESCRIPTION

Unless defined otherwise, all terms used in the description of the invention, including the technical and scientific terms, will mean what is generally understood by a specialist in the technical area of the invention. For a better evaluation of the description of the invention, a specific explanation is provided for the following terms.

"A(n)", "the" and "it" refer in this document both to singular and plural, unless the context clearly implies otherwise. For example, "a segment" implies one or more than one segment.

When in this document "approximately" or "about/around" is used with a measurable quantity, a parameter, a duration or moment, and suchlike, then variations of +/-20% or less are to be understood, preferably +/-10% or less, more preferably +/-5% or less, even more preferably of +/-1% or less, and still even more preferably of +/-0.1% or less than and of the quoted value, in so far such variations are applicable to the invention as described. Here there should however be understood that the value of the quantity whereby the term "approximately" or "about/ around" is used, is itself specifically indicated.

The terms "comprise", "comprising", "consist of", "consisting of", "provided with", "contains", "containing", "includes", "including", "implies", "implying" are synonyms and are inclusive or open terms that indicates the presence of that which follows, and which do not exclude or preclude the presence of other components, characteristics, elements, parts, steps, known or described in the prior art. The quoting of numerical intervals by the endpoints comprises all integers, fractions and/or real numbers between the endpoints, with these endpoints being included.

In a first aspect, the invention concerns a device **1** for the temporary clamping of an ice snack product **10** on a carrier **11,** whereby the device comprises a central, hollow grippable shaft **2** and a first and a second open holder **3** provided with sidewalls **5** stretching out from the shaft **2,** whereby each shaft-end **2** is provided with a holder, whereby each holder is provided with an opening **4** for receiving the carrier of the ice snack product, whereby each receiving opening **4** is suitable for receiving carriers of different sizes.

This has the advantage that carriers **11** of different sizes can be received by one device only **1.** This is economically beneficial. The sidewalls stretching out from the shaft **2** provide the device **1** with a drip receptacle **7** for receiving the melted and/or dripped ice snack product. This prevents the melting and/or dripping ice snack product **10** from spillage on or soiling of undesired places e.g. the ground, table, clothes, hands, etc. The shaft **2** provides the device **1** with a more practical and stronger grip for the consumer of an ice snack product **10** than the provided thin carrier **11.** The strong device **1** reduces the possibility of falling or spillage of the ice snack product **10.** The drip receptacle **7** prevents the spillage of portions falling off the ice snack product **10.**

The term "carrier" in the present invention refers to a body which is suitable for holding an ice snack product **10** and which is suitable for holding the ice snack comprising the carrier **11** and the ice snack product **10** by a consumer. Examples of a carrier **11** are amongst others, a stick or a cone.

In a preferred shape of the invention, the volume which is limited by the lower part of the first holder and the sidewalls of said holder, is different from the volume limited by the lower part of the second holder and the sidewalls of said second holder.

In a preferred shape of the invention, the upper edge **8** of the provided receiving opening **4** of an open holder **3** stretches less further out from the shaft than the upper edge **9** of the open holder **3.**

In a more preferred shape of the invention, the longitudinal shaft distance **2** between the upper edge **8** of the provided receiving opening **4** of the open holder **3** and the upper edge **9** of the open holder **3** is minimal.

In another more preferred shape of the invention, the distance from the upper edge **9** of the open holder **3** to the shaft axis **2** is approximately twice the distance from the upper edge **8** of the provided receiving opening **4** of the open holder **3** to the shaft axis **2.**

In a preferred shape of a device **1** according to the invention, a receiving opening **4** is concerned in the shape of a cross superposed on a circle, whereby the diameter of said circle is smaller than the shortest arm of said cross.

This has the advantage that both the circle-shaped carriers **11** in cross-section and the rectangular-shaped carriers **11** in cross-section are receivable in the device **1.** The shape of the receiving opening also makes the inserting of a rectangular-shaped carrier **11** in cross-section easier. Namely, there are two insert slots available. This reduces any difficulty when the carrier is inserted into the receiving opening which leads to the falling (off) of the ice snack.

In a preferred shape of a device **1** according to the invention, the cross-shaped receiving opening **4** has got arms of different sizes.

This has the advantage that rectangular-shaped carriers **11** in cross-section of different thicknesses can be received.

In a preferred shape of a device **1** according to the invention, the receiving opening **4** is star-shaped, whereby this receiving opening **4** consists of three or more intersecting insert slots.

This has the advantage of an easier insertion of the carrier **11** into the receiving opening **4.** This reduces any nuisance or possibility to get stuck when the carrier **11** is inserted into the receiving opening **4** which leads to the falling (off) of the ice snack. This allows for a quicker insert.

In a preferred shape of a device **1** according to the invention, the measurements of the insert slots of a receiving opening **4** are approximately equal to the cross-section of a carrier **11.**

In a preferred shape of a device **1** according to the invention, said insert slots are of the same length.

This has the advantage of an easier insertion of the carrier **11** into the receiving opening **4.** This reduces any nuisance or possibility to get stuck when the carrier **11** is inserted into the receiving opening **4** which leads to the falling (off) of the ice snack.. This allows for a quicker insert.

In a preferred shape of a device **1** according to the invention, a receiving opening **4** is concerned in the shape of a curved combination of intersecting insert slots.

This has the advantage of an easier insertion of the carrier **11** into the receiving opening **4.** This reduces any difficulty when the carrier **11** is inserted into the receiving opening **4** or that the same gets stuck which leads to the falling (off) of the ice snack. This allows for a quicker insert.

In a preferred shape of a device **1** according to the invention, an open holder **3** is provided with a tube-shaped part **6,** stretching out from the shaft **2,** and whereby a receiving opening **4** is provided at the end of said tube-shaped part **6,** away from said shaft **2.**

This has the advantage that the tube-shaped part **6** can receive a carrier **11** and prevents it from falling over. Also, a better clamping is provided.

In a preferred shape of a device **1** according to the invention, the first and second open holder **3** both have a larger cross-section than the largest cross-section of the shaft **2.**

This has the advantage that the shaped drip receptacle **7** covers a large surface below the ice snack product **10.** Consequently, there is less possibility of spillage of the ice snack product **10** falling next to the sidewalls **5.**
In a preferred shape of a device **1** according to the invention, one of the first and second open holders **3,** serves as a support for the device if one of said open holders **3** is placed on an even surface.
This has the advantage that the consumption of the ice snack product can take place in a safer and steadier manner. This allows the consumer to eat the ice snack product **10** also when he is sitting, for example at a table with an even surface as underground.

In a preferred shape of a device **1** according to the invention, a receiving opening **4** is circle-shaped in cross-section.

This has the advantage that also ice snack cones can be received in the device **1.**

In a preferred shape of a device **1** according to the invention, an anti-slip layer is provided on the exterior of the shaft **2** and/or the sidewalls **5** of the first and second holder.

The term "anti-slip layer" in the present invention means a layer provided with a rough surface like, for example, a 'textured surface'.

This has the advantage that the possibility of the slipping of the shaft out of one's hands **2** is significantly reduced. This also allows for a steadier grip during consumption or moving.

In a preferred shape of a device **1** according to the invention, said grippable shaft **2** and said first and second open holders **3** are made of a material with a predetermined thickness, whereby said tube-shaped part **6** comprises sidewalls **5** of said predetermined thickness.

In a preferred shape of a device **1** according to the invention, the device **1** is made of plastic, rubber, cardboard or plate paper. In a more preferred shape of a device **1** according to the invention, the device **1** is made of "food grade" polypropylene.

In a preferred shape of a device **1** according to the invention, said grippable shaft **2** and said first and second open holders **3,** are made of a material with a predetermined thickness, whereby the bottom part of an open holder **3** is made of a material with a second predetermined thickness, whereby this second predetermined thickness is larger than said first predetermined thickness.

This has the advantage that when the carrier **11** is clamped into the receiving opener **4,** an ice snack product **10** and/or carrier **11** of a larger weight are carried by the tube-shaped part **6.**

In a preferred shape of a device **1** according to the invention, the tube-shaped part **6** comprises side walls **5** with a third predetermined thickness, whereby this third predetermined thickness is larger than said first predetermined thickness.

This has the advantage that the device **1** is more resistant against falling over or falling onto the hard underground because of stronger sidewalls **5** on the holders **3.** This provides a stronger and more robust device **1.**

In a preferred shape of a device **1** according to the invention, said tube-shaped part **6** stretches out to said material with a second predetermined thickness.

This has the advantage that when the carrier **11** is clamped into the receiving opener **4** an ice snack product **10** and/or carrier **11** of a larger weight can be carried by the tube-shaped part **6.**

In a second aspect the invention concerns a system which comprises a device **1** and an ice snack product **10** on a carrier **11** whereby the carrier **11** is clamped into a receiving opening **4** of said device **1.**

In the following, the invention is described on the basis of non-limiting examples that illustrate the invention, and which are not intended nor may be interpreted to limit the scope of the invention.

### EXAMPLES

### EXAMPLE 1:

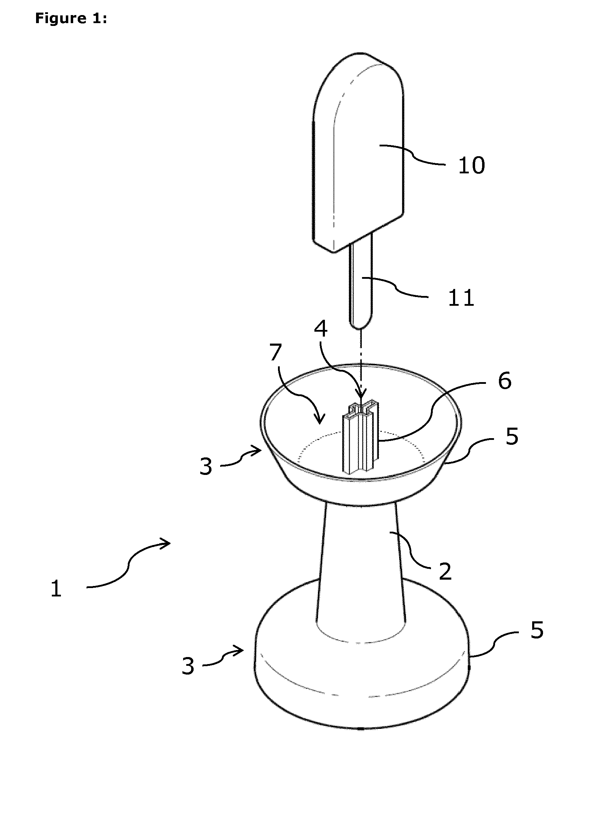

Figure 1 is a three-dimensional aerial view of a device **1** according to a preferred shape of the present invention, jointly with an ice snack, comprising an ice snack product **10** on a thick stick **11.** The device **1** is provided with a shaft **2,** which is provided with two open holders **3.** The sidewall **5** of the superior open holder **3** stretches out from the shaft **2** forming a drip-catching or drip receptacle **7** for melting ice. The open holder is provided with a tube-shaped part **6,** with a receiving opening **4** at its end. The shape of this opening **4** contains a cross with arms of different sizes superposed on a circle-shape. The Figure illustrates how the ice snack with a thick stick **11** is received by the device **1.**

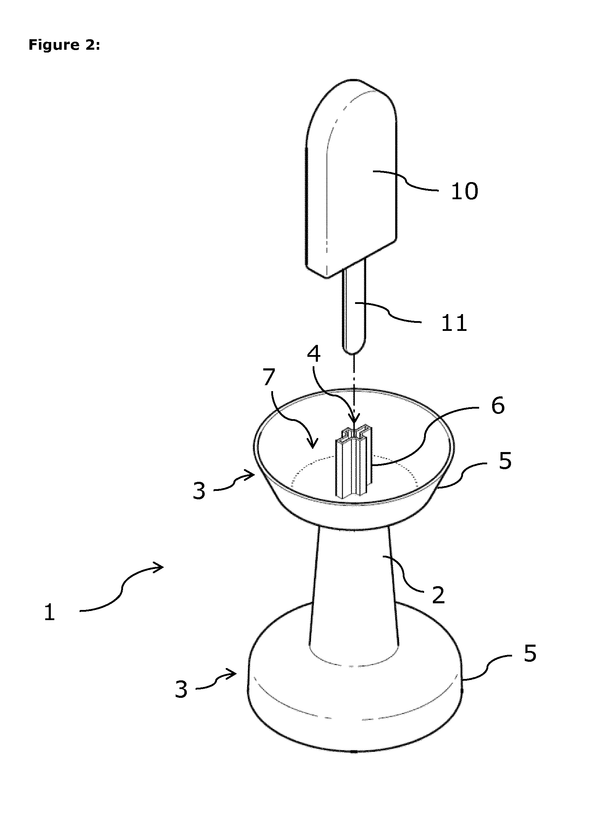

Figure 2 is a top plan view of an open holder of the device **1** according to a preferred shape of the present invention. The open holder is circle-shaped in cross-section. The open holder **3** is provided with a cross-shaped receiving opening **4.** A drip receptacle is situated between the receiving opening **4** and the sidewall **5.**

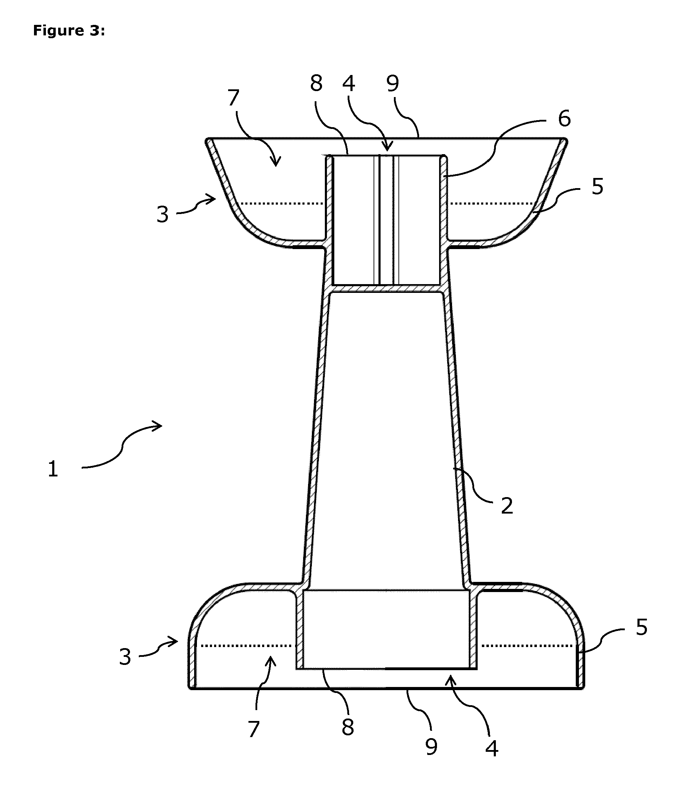

Figure 3 is a cross-sectional view of the device **1** in Figure 1 according to a preferred shape of the present invention. The plane of the cross-section is situated according to the short arm of the cross-shaped receiving opening **4.** For both open holders **3** the edge **8** of the provided receiving opening **4** is less far stretched out from the shaft than the edge **9** of the open holder **3.**

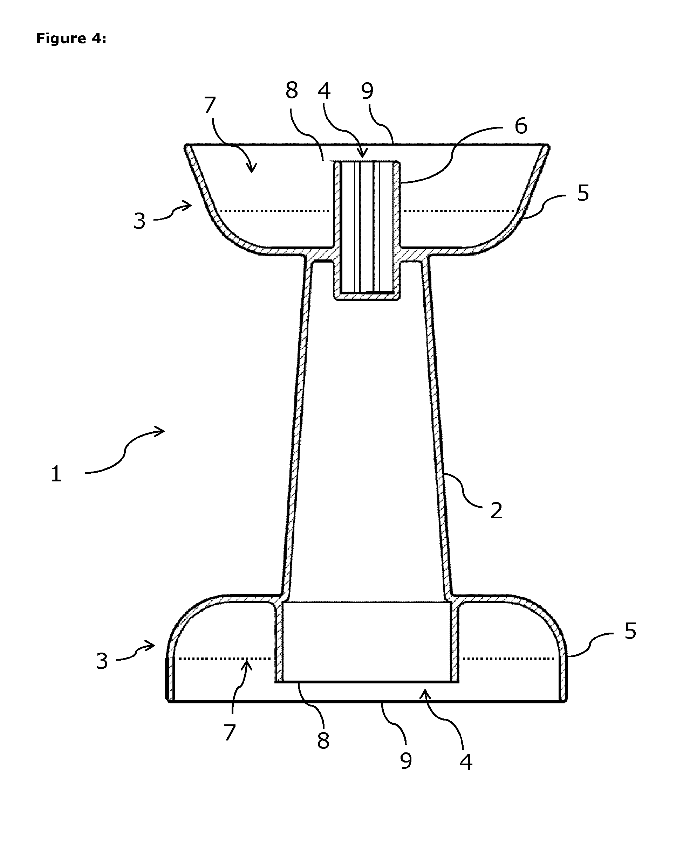

Figure 4 is a cross-sectional view of the device **1** in Figure 1 according to a preferred shape of this invention. The plane of the cross-section is situated according to the long arm of the cross-shaped receiving opening **4.** For both open holders **3** the edge **8** of the provided receiving opening **4** is less far stretched out from the shaft than the edge **9** of the open holder **3.**

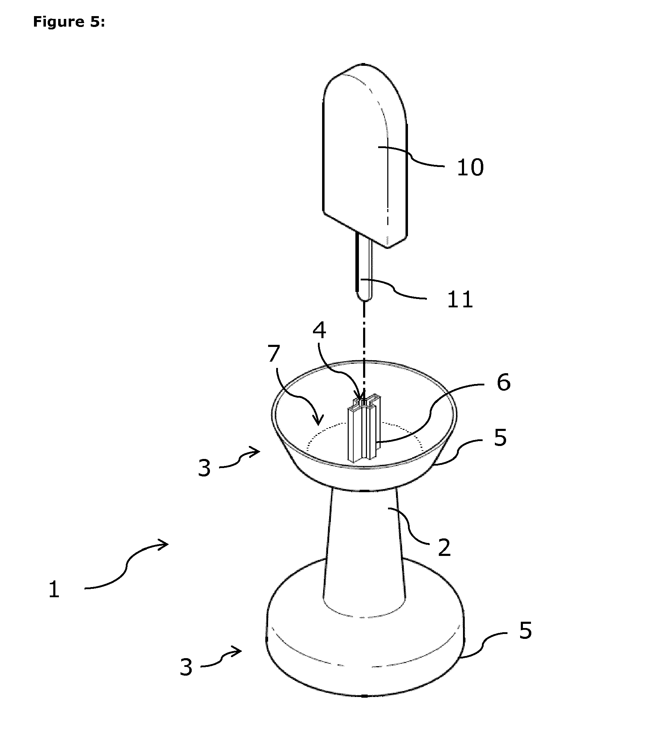

Figure 5 is a view of a device **1,** receiving an ice snack carried by a stick which is not as thick **11** than the stick **11** shown in Figure 1.

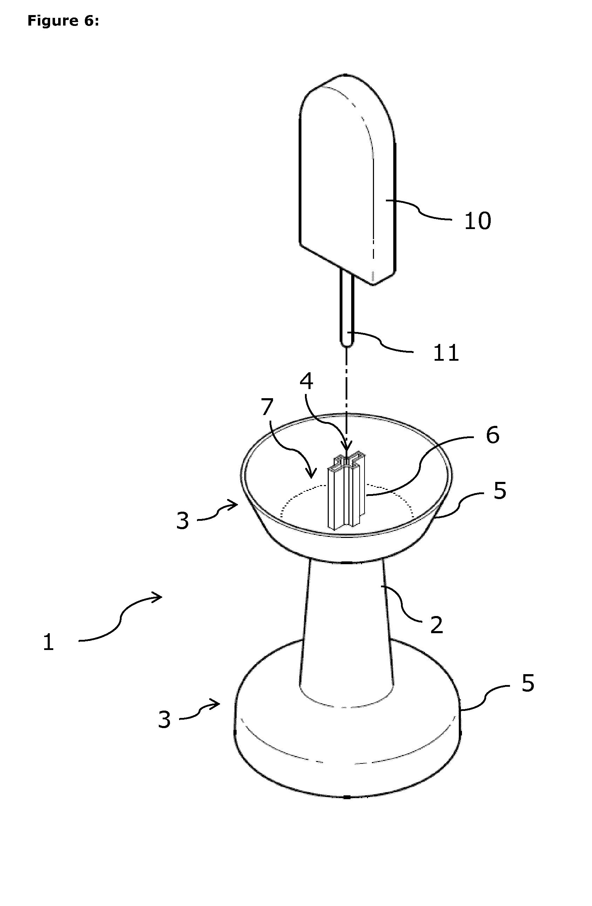

Figure 6 is a view of a device **1** receiving an ice snack carried by a round stick **11.**

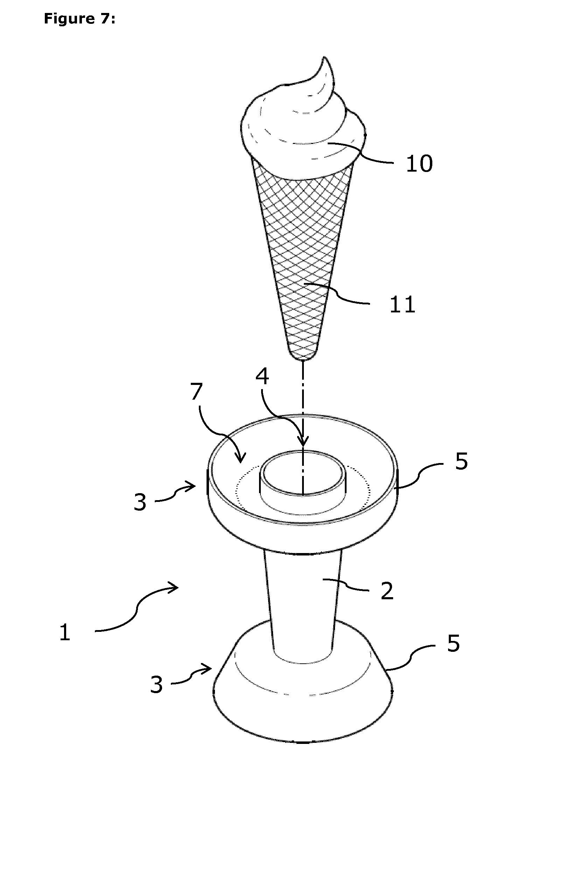

Figure 7 is a three-dimensional aerial view of a device **1** according to a preferred shape of the present invention, jointly with an ice snack cone, which comprises an ice snack product **10** on a cone **11.** The device **1** is provided with a shaft **2,** which is provided with two open holders **3.** The sidewall **5** of the superior open holder **3** stretches out from the shaft **2** forming a drip-catching or drip receptacle **7** for melting ice. The open holder is provided with a circle-shaped receiving opening 4. The Figure illustrates the receiving.

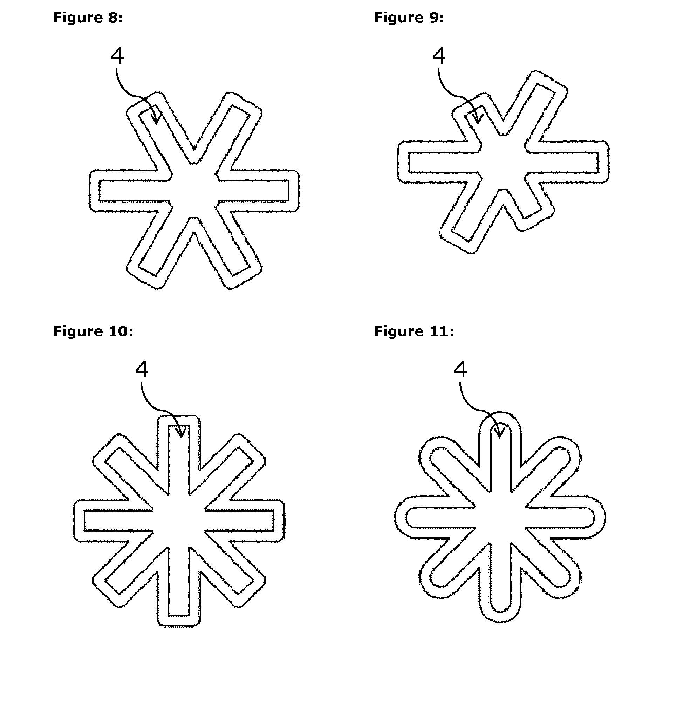

Figure 8 is a top plan view of a star-shaped receiving opening **4** according to a preferred shape of the present invention. The receiving opening **4** consists of three or more intersecting insert slots.
Figure 9 is a top plan view of a star-shaped receiving opening **4** according to a preferred shape of the present invention. The receiving opening **4** consists of three or more intersecting insert slots of different lengths.
Figure 10 is a top plan view of a star-shaped receiving opening **4** according to a preferred shape of the present invention. The receiving opening **4** consists of four intersecting insert slots of the same length.
Figure 11 is a top plan view of a star-shaped receiving opening **4** according to a preferred shape of the present invention. The receiving opening **4** consists of four intersecting insert slots of the same length, whereby the edge **8** of these slots is curved.

It is presumed that the present invention is not limited to the designs described above and that some adjustments or changes can be added to the described examples without having to re-evaluate the appended claims.

## Claims

1. Device (1) for the temporary clamping of an ice snack product (10) on a carrier, (11), which comprises:
• a central hollow, grippable shaft (2);
• a first and a second open holder (3) provided with sidewalls (5) stretching out from the (2) shaft, whereby each shaft-end (2) is provided with a holder, whereby each holder is provided with an opening (4) for receiving the carrier of the ice snack product, **characterized in that**, each receiving opening (4) is suitable for receiving carriers of different sizes.

2. Device (1) according to claim **1, characterized in that**, a receiving opening (4) is in the shape of a cross superposed on a circle, whereby the diameter of said circle is smaller than the shortest arm of said cross.

3. Device (1) according to claim **2, characterized in that**, the cross-shaped receiving opening (4) has got arms of different sizes.

4. Device (1) according to claim **1, characterized in that**, the receiving opening (4) is star-shaped, whereby this receiving opening (4) consists of three or more intersecting insert slots.

5. Device (1) according to claim **4, characterized in that**, the intersecting insert slots are of the same length.

6. Device (1) according to any of claims **1 to 5, characterized in that**, a receiving opening (4) is in the shape of a curved combination of intersecting insert slots.

7. Device (1) according to any of claims **1 to 6, characterized in that**, an open holder (3) is provided with a tube-shaped part (6), stretching out from the shaft (2), and whereby a receiving opening (4) is provided at the end of the tube-shaped part (6), away from said shaft (2).

8. Device (1) according to any of claims **1 to 7, characterized in that**, the first and second open holder (3) both have a larger cross-section than the largest cross-section of the shaft (2).

9. Device (1) according to any of claims **1 to 8, characterized in that**, one of the first and second open holders (3) serves as a support for the device if one of said open holders (3) is placed on an even surface.

10. Device (1) according to any of claims **1 to 9, characterized in that**, a receiving opening (4) is circle-shaped in cross-section.

11. Device (1) according to any of claims **1 to 10, characterized in that,** an anti-slip layer is provided on the exterior of the shaft (2) and/or the sidewalls (5) of the first and second holder.

12. Device (1) according to any of claims **1 to 11, characterized in that**, said grippable shaft (2) and said first and second open holders (3) are made of a material with a predetermined thickness, whereby said tube-shaped part (6) comprises sidewalls (5) of said predetermined thickness.

13. Device (1) according to any of claims **1 to 12, characterized in that,** said grippable shaft (2) and said first and second open holders (3), are made of a material with a predetermined thickness, whereby the bottom part of an open holder (3) is made of a material with a second predetermined thickness, whereby this second predetermined thickness is larger than said first predetermined thickness.

14. Device (1) according to any of claims **1 to 13, characterized in that,** the tube-shaped part (6) comprises side walls (5) with a third predetermined thickness, whereby this third predetermined thickness is larger than said first predetermined thickness.

15. Device (1) according to any of claims **1 to 14, characterized in that**, said tube-shaped part (6) stretches out to said material with a second predetermined thickness.

16. System which comprises:
• a device (1) according to any of claims **1 to 15;**
• ice snack product (10) on a carrier (11), whereby the carrier (11) is clamped in a receiving opening (4) of said device (1).
